# EUROPÄISCHE PATENTSCHRIFT

(11) **EP 3 498 436 B1**
(45) Veröffentlichungstag und Bekanntmachung des Hinweises auf die Patenterteilung: **15.05.2024**
(21) Anmeldenummer: 18200441.6
(22) Anmeldetag: 15.10.2018
(51) Int. Cl.: B25J 15/08, B25J 19/06

(54) **HANDHABUNGSEINHEIT MIT EINEM FESTSETZMECHANISMUS ZUM FESTSETZEN EINES BEWEGTEN BAUTEILS**
HANDLING UNIT WITH A FIXING MECHANISM FOR FIXING A MOVABLE PART
UNITÉ DE MANIPULATION DOTÉE D'UN MÉCANISME DE FIXATION PERMETTANT DE FIXER UN COMPOSANT EN MOUVEMENT

(30) Priorität: 23.10.2017 DE 102017124700
(43) Veröffentlichungstag der Anmeldung: 19.06.2019
(73) Patentinhaber: SCHUNK SE & Co. KG Spanntechnik Greiftechnik Automatisierungstechnik, 74348 Lauffen am Neckar (DE)
(72) Erfinder: FILOSA, Giuseppe, 24043 Caravaggio (IT); SCHELLENBAUER, Bernd, 74389 Cleebronn (DE)
(74) Vertreter: DREISS Patentanwälte PartG mbB

(56) Entgegenhaltungen:
- DE-A1- 19 715 082
- DE-A1-102012 220 294
- JP-A- 2001 038 667
- JP-B2- 3 129 369
- US-A1- 2009 200 090
- "Blechteile sicher im Griff", TECHNISCHE RUNDSCHAU, HALLWAG, BERN; CH, DE, vol. 101, no. 5, 6 March 2009 (2009-03-06) , page 72, XP001547408, ISSN: 1023-0823

## Beschreibung

Die Erfindung betrifft eine Handhabungseinheit, insbesondere Linear-, Greif- oder Schwenkeinheit, mit einem bewegten Bauteil und mit einem Festsetzmechanismus zum Festsetzen des Bauteils, wobei der Festsetzmechanismus ein Halteelement aufweist, das zur Festsetzung des Bauteils gegen das Bauteil wirkt.

Derartige Handhabungseinheiten sind in vielfältiger Art und Weise im Bereich der Automatisierung- und Robotertechnik bekannt. Mit solchen Handhabungseinheiten werden bewegte Bauteile auf eine Position verfahren, in der sie übergeben oder bearbeitet werden.

Bei Lineareinheiten kann es erforderlich sein, verfahrbare Schlitten an vorgegebenen Positionen festzusetzten. Bei Greifeinheiten werden Grundbacken festgesetzt und bei Schwenkeinheiten werden Schwenkteller entsprechend festgesetzt. Zur Festsetzung findet in der Regel ein Festsetzmechanismus Verwendung, der das jeweilige bewegte Bauteil, das als Schlitten, Backe oder Schwenkteller ausgebildet sein kann, oder welches ein mit diesen Bauteilen bewegungsgekoppeltes Bauteil sein kann, Verwendung. Das Festsetzen erfolgt dabei regelmäßig durch ein Halteelement, das das jeweilige Bauteil insbesondere kraftschlüssig festsetzt.

Zur Aufbringung der Haltekraft zur Festsetzung des Bauteils finden bei pneumatisch arbeitenden Einheiten insbesondere vorgespannte Federspeicher Verwendung. Auch ist bekannt, elektrische Bremsen vorzusehen, bei welchen mittels bestromten Spulen magnetische Klemmkräfte bereitgestellt werden.

Aus der JP 3 129369 B2 ist eine elektromagnetische Bremse bekannt, welche einen Elektromagneten aufweist, der zur Festsetzung bzw. zur Freigabe einer Kolbenstange mit unterschiedlicher Polung bestromt wird.

Aus der US 2009/0200090 A1 ist ein robotisches Gelenk mit einer Bremse, welche durch einen bistabilen Magneten angetrieben wird.

Der vorliegenden Erfindung liegt die Aufgabe zugrunde, eine Handhabungseinheit vorzuschlagen, mit der ein sicheres Festsetzen des bewegten Bauteils bereitstellt. Diese Aufgabe wird gelöst durch eine Handhabungseinheit mit den Merkmalen des Patentanspruchs 1.

Folglich ist insbesondere vorgesehen, dass ein umpolbarer Magnet und eine Polarisierungsspule zur Umpolung des umpolbaren Magneten von einer ersten Polkonfiguration in eine zweiten Polkonfiguration vorgesehen sind, wobei der umpolbare Magnet derart angeordnet ist, dass in der ersten Polkonfiguration ein Magnetfeld derart ausgebildet ist, dass das Halteelement eine Kraft erfährt, die das Halteelement zur Festsetzung des Bauteils gegen das Bauteil drängt und dass in der zweiten Polkonfiguration das Magnetfeld derart ausgebildet ist, dass das Halteelement das Bauteil frei gibt.

Bei dem umpolbaren Magneten handelt es sich um einen bistabilen Magneten, der zwischen zwei Polkonfigurationen aufgrund der Aktvierung der Polarisierungsspule wechseln kann.

Beim dem erzeugten Magnetfeld handelt es letztlich um eine vektorielle Größe, die eine Richtung und eine Intensität aufweist. Durch Umschalten zwischen der ersten Polkonfiguration und der zweiten Polkonfiguration wird folglich das Magnetfeld, das heißt dessen Richtung und/oder dessen Intensität so verändert, dass es letztlich das Halteelement gegen das Bauteil betätigt bzw. freigibt.

Außerdem ist eine Steuereinheit vorgesehen, die eine Lade- und Speichereinheit zum Laden von Speicherelementen mit elektrischer Energie aufweist, wobei die gespeicherte Energie zur Bestromung der Polarisierungsspule und damit zur Umpolung des umpolbaren Magneten Verwendung findet. Bei Anschluss der Steuereinheit an eine elektrische Stromquelle kann folglich über die Ladeeinheit die Speichereinheit zur Speicherung von elektrischer Energie aufgeladen werden. Dann, wenn eine Umpolarisierung erfolgen soll, wird die elektrische Energie aus der Speichereinheit zur Bestromung der Polarisierungsspule verwendet. Die Polarisierungsspule und der umpolbare Magnet können dabei so ausgebildet sein, dass eine Umpolarisierung bei einem durch die Spule fließenden Stromimpuls, der eine ausreichende Größe aufweist, erfolgt.

Dabei ist vorteilhaft, wenn die Umpolarisierungsspule und der umpolbare Magnet so zusammenwirken, dass der umpolbare Magnet durch einen durch die Umpolarisierungsspule fließenden Stromimpuls eine Umpolung erfährt. Durch einen entsprechend hohen Stromimpuls lässt sich ein entsprechend hoher elektromagnetischer Impuls erzeugen, der zu einer Umpolarisierung des umpolbaren Magneten führt. Der Stromimpuls muss dabei eine Höhe erreichen, die dazu führt, dass alle magnetischen Bereiche innerhalb des umpolbaren Magneten umpolarisiert werden, damit der Magnet als solcher umgepolt wird.

Vorteilhaft ist, wenn zur Ausbildung der Magnetfelder in der ersten und/oder zweiten Polkonfiguration wenigstens ein Permanentmagnet und/oder wenigstens ein Joch vorgesehen ist. Der umpolbare Magnet ist dann zusammen mit dem wenigstens einen Joch und/oder mit dem wenigstens einem Permanentmagneten so angeordnet, dass in der ersten Polkonfiguration das Magnetfeld das Halteelement betätigt und dass in der zweiten Polkonfiguration das Magnetfeld so geführt wird, dass es das Halteelement nicht mehr gegen das Bauteil drängt, wodurch das Bauteil letztlich freigegeben wird.

Der umpolbare Magnet weist dabei vorteilhafterweise eine geringe magnetische Koerzitivfeldstärke, also eine geringe magnetische Stabilität auf, wobei die zur Verwendung kommenden Permanentmagnete eine hohe magnetische Koerzitivfeldstärke aufweisen, also eine sehr hohe magnetische Stabilität. Dabei hat sich als vorteilhaft herausgestellt, wenn der umpolbare Magnet aus einer AlNiCo-Legierung gebildet ist und/oder wenn die Permanentmagnete aus einer Neodym-Eisen-Bor-Legierung gebildet sind.

Die Polarisierungsspule ist vorteilhafterweise so angeordnet, das sie den umpolbaren Magneten wenigstens abschnittsweise umgibt und dass den beiden Polbereichen des umpolbaren Magneten gegenüberliegend jeweils ein Permanentmagnet vorgesehen ist. Je nach Polkonfiguration des umpolbaren Magneten wirken folglich die Permanentmagnete unterschiedlich mit dem umpolbaren Magneten zusammen, wodurch letztlich das aus den Magneten resultierende Magnetfeld in der ersten Polkonfiguration in eine andere Richtung verläuft und/oder eine andere Intensität hat als in der zweiten Polkonfiguration.

Denkbar ist, dass die Wicklungen der Polarisierungsspule zwischen den Polbereichen des umpolbaren Magneten und den dem jeweiligen Polbereich gegenüberliegenden Permanentmagneten verlaufen. Gerade durch diese Anordnung kann eine günstige Umpolarisierung des umpolbaren Magneten erreicht werden.

Vorteilhaft ist, wenn der umpolbare Magnet quaderförmig mit an einander gegenüberliegenden Stirnseiten vorgesehenen Polbereichen ausgebildet ist, wobei den Stirnseiten gegenüberliegend jeweils ein Permanentmagnet vorgesehen ist. An zwei einander gegenüberliegenden Längsseiten des umpolbaren Magneten kann ferner jeweils ein Joch vorgesehen sein, das in der ersten Polkonfiguration das Magnetfeld derart führt, dass die beiden Joche mit einem mit dem Halteelement bewegungsgekoppelten Zuganker zusammenwirken. In der ersten Polkonfiguration wird folglich der Zuganker entweder angezogen oder abgestoßen, so dass letztlich aufgrund der daraus resultierenden Anzieh- oder Abstoßkraft das Halteelement gegen das bewegte Bauteil zur kraft- bzw. reibschlüssigen Festsetzung beaufschlagt wird. Der Zuganker kann dabei das Halteelement tragen oder bilden oder es durch eine entsprechend vorgesehene Mechanik betätigen.

Um insbesondere in der zweiten Polkonfiguration ein sicheres Freigeben des bewegten Bauteils zu erreichen ist vorteilhaft, wenn zwischen den mit dem Zuganker zusammenwirkenden Bereichen der Joche und dem Zuganker ein Rückstellelement vorgesehen ist, das den Anker, und damit das Halteelement, weg vom Bauteil drängt. Das Rückstellelement kann dabei als Federelement und insbesondere als elastisch nachgiebiger Elastomersteg, - ring oder -block ausgebildet sein.

Die Steuereinheit ist dabei vorteilhafterweise so eingerichtet, dass dann, wenn ein Spannungsabfall stattfindet bzw. erkannt wird eine Umpolung des umpolbaren Magneten erfolgt, wenn das Bauteil im Zeitpunkt des Spannungsabfalls nicht festgesetzt ist. Hierdurch kann erreicht werden, dass bei Stromausfall ein automatisches, und insbesondere sofortiges Festsetzen des Bauteils erfolgt. Dadurch, dass die Energie zur Umpolung des umpolbaren Magneten in der Speichereinheit gespeichert ist, kann eine Umpolung auch dann stattfinden, wenn keine Versorgungsspannung an der Steuereinheit anliegt.

Ferner kann die Steuereinheit so ausgelegt sein, dass die Speicherelemente genug elektrische Energie speichern, um auch nach einer größeren Zeitspanne nach einem Spannungsabfall ein Umpolen des umpolbaren Magneten zu ermöglichen, um den Festsetzmechanismus bei Bedarf lösen zu können. Hierdurch kann erreicht werden, dass zeitlich lange nach einem Spannungsabfall, insbesondere dann, wenn das Bauteil händisch gelöst werden soll, dies durch entsprechende Betätigung der Steuereinheit möglich ist.

Die Speicherelemente zur Speicherung der elektrischen Energie, mit der letztlich eine Umpolung erfolgt, können insbesondere als Kondensatoren ausgebildet sein, die einen kurzen, aber sehr hohen Stromimpuls zur Verfügung stellen.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: eine erfindungsgemäße Handhabungseinheit;
- Figur 2: den Festsetzmechanismus der Handhabungseinheit gemäß Figur 1;
- Figur 3: den Festsetzmechanismus gemäß Figur 2 ohne Joch;
- Figur 4: den Festsetzmechanismus gemäß Figur 1 in der ersten Polkonfiguration;
- Figur 5: den Festsetzmechanismus gemäß Figur 1 in der zweiten Polkonfiguration; und
- Figur 6: eine schematische Darstellung einer Steuereinheit der Handhabungseinheit.

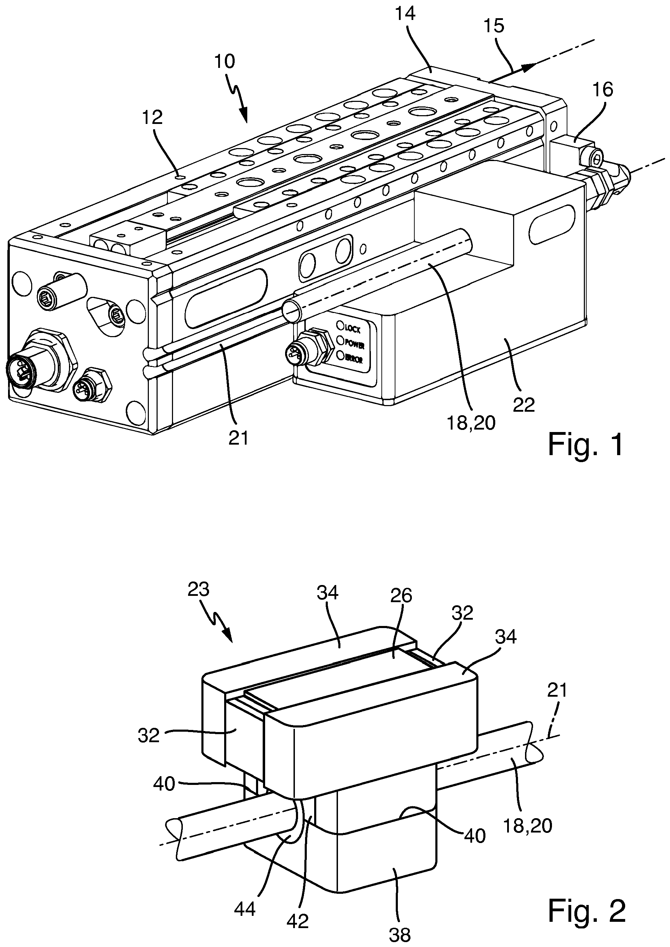

In der Figur 1 ist eine Handhabungseinheit 10 in Form eines Linearmoduls gezeigt, das einen Grundkörper 12 und einen gegenüber dem Grundkörper 12 entlang einer Verfahrachse 15 verfahrbaren Schlitten 14 aufweist. Mit dem Schlitten 14 können Gegenstände von einer Position in eine andere Position bewegt werden. Die Bewegungsrichtung kann dabei, je nach Anordnung der Handhabungseinheit 10 im Raum, in vertikale, horizontale oder in eine sonstige Richtung erfolgen. Mit dem Schlitten 14 bewegungsgekoppelt ist ein Koppelelement 16, an dem ein bewegtes Bauteil 18 in Form einer Stange 20 befestigt ist, das sich synchron mit dem Schlitten 14 bewegt. Die Stange 20 erstreckt sich dabei parallel zur Verfahrachse 15 entlang der Achse 21.

Im Grundgehäuse 12 ist eine nicht dargestellte Antriebseinheit vorgesehen, mit der der Schlitten 14 entlang des Pfeiles 15 weg vom Grundgehäuse 12 bzw. hin zum Grundgehäuse 12 bewegt werden kann. Die Handhabungseinheit 10 umfasst ferner eine am Grundgehäuse 12 angeordnete Festsetzeinheit 22, mit der das bewegte Bauteil 18, bzw. die Stange 20, festgesetzt werden kann. Mit Festsetzung des Bauteils 20 wird aufgrund der Bewegungskopplung mit dem Schlitten 14 auch der Schlitten 14 festgesetzt.

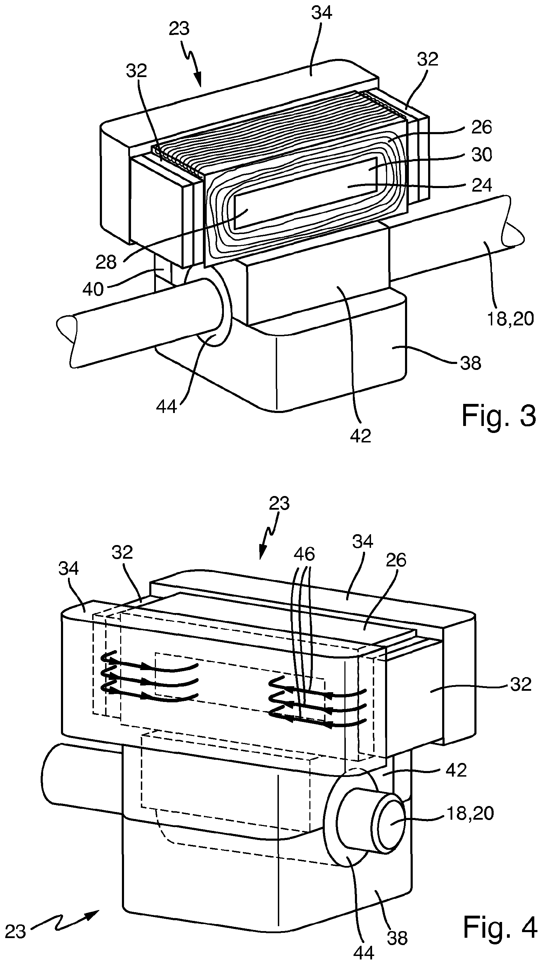

Die Festsetzeinheit 22 weist einen in den Figuren 2 bis 4 als Einzelteil dargestellten Festsetzmechanismus 23 auf. Der Festsetzmechanismus 23 umfasst einen umpolbaren Magneten 24, der in Figur 3 deutlich zu erkennen ist, sowie eine den umpolbaren Magneten umgebende Polarisierungsspule 26. Der umpolbare Magnet 24 ist dabei quaderförmig ausgebildet, erstreckt sich in Längsrichtung parallel zur Bewegungsachse 21 des Bauteils 18 und weist an den einander abgewandten Stirnseiten zwei Polbereiche 28 und 30 auf. Wie aus Figur 3 deutlich wird, verlaufen die Wicklungen der Spule 26 in Längsrichtung um den umpolbaren Magneten 24. Ferner wird deutlich, dass den jeweiligen Polbereichen 28, 30 gegenüberliegend ein Permanentmagnet 32, insbesondere ein Neodym-Eisen-Bor-Magnet, vorgesehen ist.

Die Wicklungen der Spule 26 verlaufen dabei zwischen dem jeweiligen Polbereich 28, 30 und den dem jeweiligen Polbereich 28, 30 zugeordneten Permanentmagneten 32.

An den einander gegenüberliegenden Längsseiten des umpolbaren Magneten 24 ist jeweils ein Joch 34 vorgesehen, um das von dem umpolbaren Magneten 24 und den beiden Permanentmagneten 32 erzeugte Magnetfeld entsprechend zu führen bzw. auszubilden.

Die Joche 34 weisen auf ihrer Unterseite Abschnitte 40 auf, die mit einem Halteelement 38 in Form eines Zugankers 39 zusammenwirken. In Querrichtung zwischen den Abschnitten 40 ist ein amagnetischer Körper 42 vorgesehen, wobei das bewegte Bauteil 18 entlang der Achse 21 zwischen dem Körper 42 und dem Zuganker 38 verlaufend angeordnet ist. Der Körper 42 kann beispielsweise aus einer Messinglegierung bestehen. Zur Optimierung der Reibung zwischen den bewegten Bauteil 18 und dem Zuganker 38 bzw. dem Körper 42 ist ein hülsenförmiger Reibbelag 44 vorgesehen.

Der umpolbare Magnet 24 ist als bistabiler Magnet, beispielsweise als AlNiCo-Magnet ausgebildet, der eine geringe magnetische Koerzitivfeldstärke aufweist. Der umpolbare Magnet 24 und die Polarisierungsspule 26 sind dabei so ausgelegt, dass bei Durchleiten eines geeigneten Stromimpulses durch die Polarisierungsspule 26 der umpolbare Magnet 24 von einer ersten Polkonfiguration in eine zweite Polkonfiguration wechselt.

In der ersten Polfiguration bildet der umpolbare Magnet 24 zusammen mit den Permanentmagneten 32 und den Jochen 34 ein Magnetfeld aus, dessen Feldlinien 46 in Figur 4 angedeutet sind. Das Magnetfeld wird dabei von dem einem Joch 34 über den Zuganker 38 hin zu dem anderen Joch 34 geführt, wobei der Zuganker 38 eine Kraft erfährt, die den Zuganker 34 hin zu den Abschnitten 40 drängt, wodurch das bewegte Bauteil 18 bzw. die Stange 20 zwischen dem Zuganker 38 und dem Körper 42 geklemmt festgesetzt wird. In der Figur 4 gezeigten ersten Polkonfiguration sind die Polbereich 28, 30 des umpolbaren Magneten 24 so polarisiert, dass jeweils die Polbereiche 28, 30 einem gleichgerichteten Polbereich der Permanentmagnete 32 gegenüberliegen, weshalb das Magnetfeld über die Joche 34 zum Zuganker 38 geführt wird.

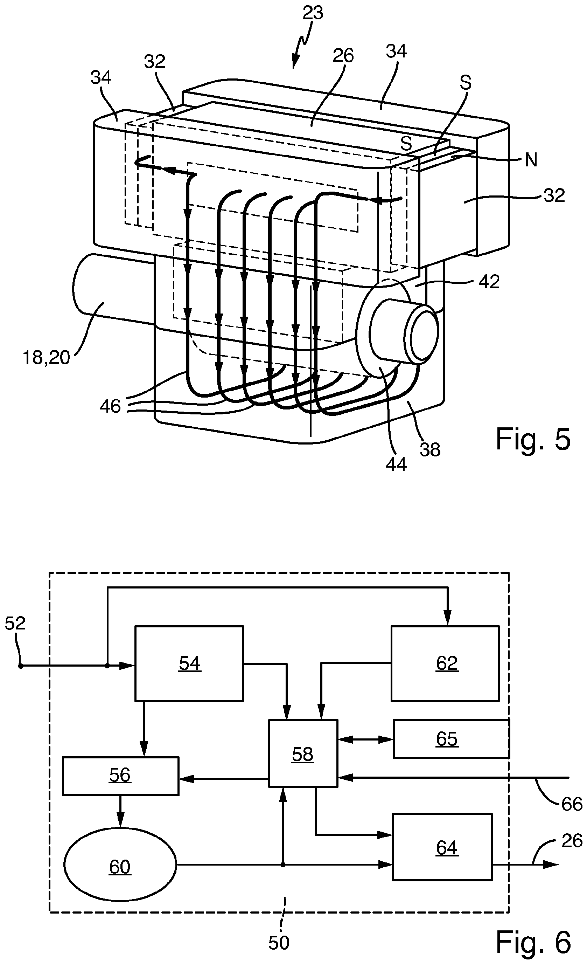

Nach Umpolung des umpolbaren Magneten 24 ergibt sich in der zweiten Poolkonfiguration ein Magnetfeld, wie es anhand der Feldlinien 46 in Figur 5 gezeigt ist. Das Magnetfeld wird dabei derart geführt, dass es nicht über die Abschnitte 40 der Joche 34 hin zum Zuganker 38 verläuft, sondern dass es sich zwischen den Polbereichen 28, 30 des umpolbaren Magneten 24 und den jeweiligen Polbereichen benachbarten Permanentmagneten 32 ausbildet. In dieser zweiten Polkonfiguration sind unterschiedlich ausgebildete Pole des umpolbaren Magneten 24 und dem jeweiligen Permanentmagneten 32 benachbart angeordnet.

In der zweiten Polkonfiguration wird folglich der Zuganker 38 nicht gegen die Abschnitte 40 der Joche 34 beaufschlagt; das bewegte Bauteil 18, bzw. die Stange 20 kann frei bewegt werden. Um ein sicheres Lösen einer Festsetzung zu erreichen, ist vorteilhaft, wenn im Bereich zwischen den Abschnitten 40 und dem Zuganker 38 Rückstellelemente insbesondere in Form von elastisch nachgiebigen Elastomerleisten vorgesehen sind.

Die Festsetzeinheit 22 weist zudem eine in Figur 6 gezeigte Steuereinheit 50 auf. Die Steuereinheit 50 ist dabei an ein Stromnetz 52 angeschlossen, das eine Versorgungseinheit 54 mit Strom versorgt. Die Steuereinheit 50 weist zudem eine Ladeeinheit 56 sowie einen Mikroprozessor 58 auf. Die Ladeeinheit 56 dient dabei zur Ladung einer Speichereinheit 60, die elektrische Energie speichert. Diese gespeicherte elektrische Energie kann in Form eines Stromimpulses über einen Schalter 64 der Spule 26 zugeführt werden. Die Steuereinheit 50 umfasst ferner einen Detektor 62, mit dem erkannt wird, falls es am Versorgungsnetz 52 zu einem Stromabfall kommt. Ferner sind ein von Hand betätigbarer Schalter 65 sowie ein externer Eingang 66 vorgesehen. Mit dem Eingang 66 können Steuersignale externer Sensoren und/oder einer externen übergeordneten Steuereinheit an dem Mikroprozessor 58 übermittelt werden.

Im Betrieb der Handhabungseinheit 10 befindet sich der umpolbare Magnet 24 in der zweiten Polkonfiguration, in der der Festsetzmechanismus 23 das bewegte Bauteil 18 freigibt. Solange die Versorgungseinheit 54 mit dem Stromnetz 52 verbunden ist, wird über die Ladeeinheit 56 die Speichereinheit 60, die eine entsprechende Anzahl von geeigneten Kondensatoren zur Speicherung der elektrischen Energie aufweisen kann, geladen.

Sollte es zu einem Stromausfall im Netz 52 kommen, so wird dies vom Detektor 62 erkannt. Der Detektor 62 gibt dann ein entsprechendes Signal an den Mikroprozessor 58 ab. Dieser steuert daraufhin den Schalter 64 entsprechend an, wodurch die Spule 26 mit einem geeigneten Stromimpuls aus der Speichereinheit 60 beaufschlagt wird. Aufgrund des Stromimpulses kommt es zu einer Umpolung des umpolbaren Magneten 24, wodurch das bewegte Bauteil 18 festgesetzt wird.

Durch die beschriebene Betriebsweise wird verhindert, dass es bei Stromausfällen aufgrund der bewegten Teile zu Beschädigungen kommen kann; das bewegte Teil 18 wird unmittelbar nach dem Stromausfall sicher festgesetzt.

Um das bewegte Bauteil bei weiterhin bestehendem Stromausfall zu einem späteren Zeitpunkt lösen zu können, kann der Schalter 65 manuell betätigt werden. Durch Betätigen des manuellen Schalters 65 wird die Speichereinheit 60 erneut angesteuert, wodurch ein erneuter Stromimpuls der Polarisierungsspule 26 zugeführt wird, was eine erneute Umpolung des umpolbaren Magneten 24 in die erste Polkonfiguration zur Folge hat. Das bewegte Bauteil 14 wird folglich gelöst.

Für den Fall, dass im Betrieb ein Festsetzen des bewegten Bauteils 18 an einer vorgegebenen Stelle erfolgen soll, kann der Mikroprozessor 58 über den Eingang 66 entsprechend angesteuert werden. Dadurch wird die Polarisierungsspule 26 bestromt, so dass es zu einer Umpolung des umpolbaren Magneten 24 in die erste Polkonfiguration kommt.

Auch wenn in den Figuren eine Handhabungseinheit 10 in Form einer Lineareinheit gezeigt ist, ist erfindungsgemäß auch denkbar, dass ein bewegtes Bauteil 18 einer Schwenkeinheit, beispielsweise der Schwenkteller oder ein damit gekoppeltes Bauteil, dem gleichem Prinzip folgend festsetzbar ist. Auch in Greifvorrichtungen oder Spannvorrichtungen können Greifbacken oder Spannbacken entsprechend festgesetzt werden.

## Patentansprüche

1. Handhabungseinheit (10), insbesondere Linear-, Greif- oder Schwenkeinheit, mit einem bewegten Bauteil (18) und mit einem Festsetzmechanismus (23) zum Festsetzen des Bauteils (18), wobei der Festsetzmechanismus (23) ein Halteelement (38) aufweist, das zur Festsetzung des Bauteils (18) gegen das Bauteil (18) wirkt, **dadurch gekennzeichnet, dass** ein umpolbarer Magnet (24) und eine Polarisierungsspule (26) vorgesehen sind, wobei der umpolbare Magnet (24) ein bistabiler Magnet (24) ist, der durch Aktvierung der Polarisierungsspule zwischen einer ersten Polkonfiguration und einer zweiten Polkonfiguration wechseln kann, wobei der umpolbare Magnet (24) derart angeordnet ist, dass in der ersten Polkonfiguration ein Magnetfeld derart ausgebildet ist, dass das Halteelement (38) eine Kraft erfährt, die das Halteelement (38) zur Festsetzung des Bauteils (18) gegen das Bauteil (18) drängt und dass in der zweiten Polkonfiguration das Magnetfeld derart ausgebildet ist, dass das Halteelement (38) das Bauteil (18) frei gibt, wobei eine Steuereinheit (50) vorgesehen ist, die eine Lade- und Speichereinheit (56, 60) zum Laden von Speicherelementen mit elektrischer Energie aufweist, wobei die gespeicherte Energie zur Bestromung der Polarisierungsspule (26) und damit zur Umpolung des umpolbaren Magneten (24) Verwendung findet.

2. Handhabungseinheit (10) nach Anspruch 1, **dadurch gekennzeichnet, dass** die Polarisierungsspule (26) und der umpolbare Magnet (24) so zusammen wirken, dass der umpolbare Magnet (24) durch einen durch die Polarisierungsspule (26) fließenden Stromimpuls die Umpolung erfährt.

3. Handhabungseinheit (10) nach Anspruch 1 oder 2,
**dadurch gekennzeichnet, dass** zur Ausbildung der Magnetfelder in der ersten und/oder zweiten Polkonfiguration wenigstens ein Permanentmagnet (32) und/oder wenigstens einem Joch (34) vorgesehen ist.

4. Handhabungseinheit (10) nach Anspruch 3, **dadurch gekennzeichnet, dass** die Polarisierungsspule (26) den umpolbaren Magneten (24) wenigstens abschnittsweise umgibt und dass das umpolbare Magnet zwei Polbereiche (28, 30) aufweist, denen gegenüberliegend jeweils ein Permanentmagnet (32) vorgesehen ist.

5. Handhabungseinheit (10) nach Anspruch 4, **dadurch gekennzeichnet, dass** die Wicklungen der Polarisierungsspule (26) zwischen den Polbereichen (28, 30) des umpolbaren Magneten (24) und den dem jeweiligen Polbereich (28, 30) gegenüberliegenden Permanentmagneten (32) verläuft.

6. Handhabungseinheit (10) nach einem der vorhergehenden Ansprüche, **dadurch gekennzeichnet, dass** der umpolbare Magnet (24) quaderfömig mit an einander gegenüberliegenden Stirnseiten vorgesehenen Polbereichen (28, 30) ausgebildet ist, dass den Stirnseiten gegenüberliegend jeweils ein Permanentmagnet (32) vorgesehen ist und dass an zwei einander gegenüberliegenden Längsseiten des umpolbaren Magneten jeweils ein Joch (34) vorgesehen ist, wobei das Magnetfeld in der ersten Polkonfiguration derart ausgebildet ist, dass die beiden Joche (34) mit einem mit dem Halteelement (38) bewegungsgekoppelten Zuganker (31) zusammen wirken.

7. Handhabungseinheit (10) nach Anspruch 6, **dadurch gekennzeichnet, dass** zwischen den mit dem Zuganker (39) zusammen wirkenden Abschnitte (40) der Joche (34) und dem Zuganker (39) ein Rückstellelement vorgesehen ist, das den Zuganker (39) und das Halteelement (38) weg vom Bauteil (18) drängt.

8. Handhabungseinheit (10) nach einem der vorhergehenden Ansprüche, **dadurch gekennzeichnet, dass** die Steuereinheit (50) derart eingerichtet ist, dass dann, wenn eine Spannungsabfall stattfindet eine Umpolung des umpolbaren Magneten (24) erfolgt, falls das Bauteil (18) im Zeitpunkt des Spannungsabfalls nicht festgesetzt ist.

9. Handhabungseinheit (10) nach einem der vorhergehenden Ansprüche, **dadurch gekennzeichnet, dass** die Steuereinheit (50) derart eingerichtet ist, dass die Speicherelemente genug Energie speichern um nach einem Spannungsabfall ein Umpolen des umpolbaren Magneten (24) zu ermöglichen, um den Festsetzmechanismus (23) lösen zu können.

## Claims

1. Handling unit (10), in particular a linear, gripping or pivoting unit, comprising a moving component (18) and a fixing mechanism (23) for fixing the component (18), the fixing mechanism (23) having a holding element (38) which acts against the component (18) to fix the component (18), **characterized in that** a reversible magnet (24) and a polarization coil (26) are provided, the reversible magnet (24) being a bistable magnet (24) which can change between a first pole configuration and a second pole configuration by activating the polarization coil, the reversible magnet (24) being arranged such that, in the first pole configuration, a magnetic field is designed so that the holding element (38) undergoes a force which pushes the holding element (38) against the component (18) to fix the component (18), and being arranged such that, in the second pole configuration, the magnetic field is designed so that the holding element (38) releases the component (18), a control unit (50) being provided, which has a charging and storage unit (56, 60) for charging storage elements with electrical energy, the stored energy being used to energize the polarization coil (26) and thus to reverse the polarity of the reversible magnet (24).

2. Handling unit (10) according to claim 1, **characterized in that** the polarization coil (26) and the reversible magnet (24) interact such that the reversible magnet (24) undergoes polarity reversal by a current pulse flowing through the polarization coil (26).

3. Handling unit (10) according to either claim 1 or claim 2,
**characterized in that** at least one permanent magnet (32) and/or at least one magnet yoke (34) is provided to form the magnetic fields in the first and/or second pole configuration.

4. Handling unit (10) according to claim 3, **characterized in that** the polarization coil (26) surrounds the reversible magnet (24) at least in portions,
**and in that** the reversible magnet has two pole regions (28, 30), each of which is provided opposite with a permanent magnet (32).

5. Handling unit (10) according to claim 4, **characterized in that** the windings of the polarization coil (26) extend between the pole regions (28, 30) of the reversible magnet (24) and the permanent magnets (32) opposite each pole region (28, 30).

6. Handling unit (10) according to any of the preceding claims,
**characterized in that** the reversible magnet (24) is cuboid having pole regions (28, 30) which are provided on opposite end faces, **in that** a permanent magnet (32) is provided opposite the end faces, **and in that** a magnet yoke (34) is provided on each of two opposite longitudinal sides of the reversible magnet, the magnetic field in the first pole configuration being designed such that the two magnet yokes (34) interact with a tie rod (31) coupled to the holding element (38).

7. Handling unit (10) according to claim 6, **characterized in that** a restoring element is provided between the portions (40) of the magnet yokes (34) interacting with the tie rod (39) and the tie rod (39), which restoring element pushes the tie rod (39) and the holding element (38) away from the component (18).

8. Handling unit (10) according to any of the preceding claims,
**characterized in that** the control unit (50) is configured such that, when a voltage drop occurs, the polarity of the reversible magnet (24) is reversed if the component (18) is not fixed at the time of the voltage drop.

9. Handling unit (10) according to any of the preceding claims,
**characterized in that** the control unit (50) is configured such that the storage elements store enough energy to allow the polarity of the reversible magnet (24) to be reversed after a voltage drop in order to release the fixing mechanism (23).

## Revendications

1. Unité de manipulation (10), en particulier unité linéaire, de préhension ou de pivotement, comportant une pièce (18) mobile et comportant un mécanisme de fixation (23) pour la fixation de la pièce (18), dans laquelle le mécanisme de fixation (23) présente un élément de retenue (38) qui agit à l'encontre de la pièce (18) pour la fixation de la pièce (18), **caractérisée en ce qu'**un aimant à polarité réversible (24) et une bobine de polarisation (26) sont prévus, dans laquelle l'aimant à polarité réversible (24) est un aimant bistable (24) qui peut passer d'une première configuration polaire à une seconde configuration polaire par activation de la bobine de polarisation, dans laquelle l'aimant à polarité réversible (24) est disposé de telle sorte que, dans la première configuration polaire, un champ magnétique est réalisé de telle sorte que l'élément de retenue (38) subit une force qui pousse l'élément de retenue (38) à l'encontre de la pièce (18) pour la fixation de la pièce (18) et de telle sorte que, dans la seconde configuration polaire, le champ magnétique est réalisé de telle sorte que l'élément de retenue (38) libère la pièce (18), dans laquelle une unité de commande (50) est prévue, laquelle présente une unité de charge et d'accumulation (56, 60) pour le chargement des éléments accumulateurs avec de l'énergie électrique, dans laquelle l'énergie accumulée est utilisée pour l'alimentation en courant de la bobine de polarisation (26) et ainsi pour l'inversion de polarité de l'aimant à polarité réversible (24).

2. Unité de manipulation (10) selon la revendication 1, **caractérisée en ce que** la bobine de polarisation (26) et l'aimant à polarité réversible (24) agissent conjointement de sorte que l'aimant à polarité réversible (24) subit l'inversion de polarité par une impulsion de courant circulant à travers la bobine de polarisation (26).

3. Unité de manipulation (10) selon la revendication 1 ou 2, **caractérisée en ce que,** pour la réalisation des champs magnétiques dans la première et/ou la seconde configuration polaire, au moins un aimant permanent (32) et/ou au moins une culasse (34) sont prévus.

4. Unité de manipulation (10) selon la revendication 3, **caractérisée en ce que** la bobine de polarisation (26) entoure au moins dans certaines sections l'aimant à polarité réversible (24) **et en ce que** l'aimant à polarité réversible présente deux zones polaires (28, 30) à l'opposé desquelles respectivement un aimant permanent (32) est prévu.

5. Unité de manipulation (10) selon la revendication 4, **caractérisée en ce que** les enroulements de la bobine de polarisation (26) s'étendent entre les zones polaires (28, 30) de l'aimant à polarité réversible (24) et les aimants permanents (32) opposés à la zone polaire (28, 30) respective.

6. Unité de manipulation (10) selon l'une des revendications précédentes,
**caractérisée en ce que** l'aimant à polarité réversible (24) est réalisé en forme parallélépipédique comportant des zones polaires (28, 30) prévues sur des faces frontales opposées les unes aux autres, **en ce que** respectivement un aimant permanent (32) est prévu à l'opposé des faces frontales, **et en ce que** respectivement une culasse (34) est prévue sur deux côtés longitudinaux opposés l'un à l'autre de l'aimant à polarité réversible, dans laquelle le champ magnétique est réalisé dans la première configuration polaire de telle sorte que les deux culasses (34) agissent conjointement avec un tirant (31) accouplé en mouvement à l'élément de retenue (38).

7. Unité de manipulation (10) selon la revendication 6,
**caractérisée en ce qu'**un élément de rappel est prévu entre les sections (40) des culasses (34) agissant conjointement avec le tirant (39) et le tirant (39), lequel élément de rappel pousse le tirant (39) et l'élément de retenue (38) à l'écart de la pièce (18).

8. Unité de manipulation (10) selon l'une des revendications précédentes,
**caractérisée en ce que** l'unité de commande (50) est configurée de telle sorte que, lorsqu'une chute de tension a lieu, une inversion de polarité de l'aimant à polarité réversible (24) se produit si la pièce (18) n'est pas fixée au moment de la chute de tension.

9. Unité de manipulation (10) selon l'une des revendications précédentes,
**caractérisée en ce que** l'unité de commande (50) est configurée de telle sorte que les éléments accumulateurs accumulent suffisamment d'énergie afin de permettre, après une chute de tension, une inversion de polarité de l'aimant à polarité réversible (24) afin de pouvoir desserrer le mécanisme de fixation (23).
